(19) Europäisches Patentamt
European Patent Office
Office européen des brevets

(11) Veröffentlichungsnummer : **0 464 066 B1**

# (12) EUROPÄISCHE PATENTSCHRIFT

(45) Veröffentlichungstag der Patentschrift :
**30.06.93 Patentblatt 93/26**

(51) Int. Cl.$^5$ : **C02F 1/02**, B01D 53/34

(21) Anmeldenummer : **90904796.1**

(22) Anmeldetag : **16.03.90**

(86) Internationale Anmeldenummer :
**PCT/EP90/00441**

(87) Internationale Veröffentlichungsnummer :
**WO 90/11252 04.10.90 Gazette 90/23**

## (54) VERFAHREN ZUR ZERSETZUNG VON ABFALLAUGEN AUS ABSORPTIONSPROZESSEN.

(30) Priorität : **20.03.89 DE 3909062**

(43) Veröffentlichungstag der Anmeldung :
**08.01.92 Patentblatt 92/02**

(45) Bekanntmachung des Hinweises auf die Patenterteilung :
**30.06.93 Patentblatt 93/26**

(84) Benannte Vertragsstaaten :
**BE DE ES FR GB IT**

(56) Entgegenhaltungen :
**EP-A- 0 190 395**
**DE-A- 2 553 840**

(56) Entgegenhaltungen :
**DE-A- 2 616 054**
**Patent Abstracts of Japan, volume 7, No. 161, C176, abstract from JP 58-70876, publ. 1983-04-27 (SHIN NIPPON SEITETSU K.K.)**

(73) Patentinhaber : **STILL OTTO GMBH**
**Christstrasse 9**
**W-4630 Bochum 1 (DE)**

(72) Erfinder : **TIPPMER, Kurt**
**Brombergerstrasse 34**
**W-4350 Recklinghausen (DE)**

(74) Vertreter : **Dahlkamp, Heinrich-Leo, Dipl.-Ing.**
**c/o Still Otto GmbH Patentabteilung**
**Christstrasse 9 Postfach 10 18 50**
**W-4630 Bochum 1 (DE)**

EP 0 464 066 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Zersetzung von Abfallaugen aus Absorptionsprozessen, wie sie bei der Absorption von $H_2S$ bei Anwesenheit von HCN und Oxidatoren, wie z. B. $O_2$ mit Alkalilösungen, entstehen.

Bei der Entschwefelung von Koksofengasen unterscheidet man die sogenannten Trocken- und Naßreinigungsverfahren, wobei sich die Naßverfahren wiederum in Oxidations- und Neutralisationsverfahren aufteilen. Die oxidativen Naßreinigungsverfahren, die eine Entschwefelung bis auf Ferngasqualität ermöglichen, sind durch die Absorption in alkalischer Lösung und die Oxidation des Schwefelwasserstoffes mit Luftsauerstoff zu elementarem Schwefel in der gleichen Lösung gekennzeichnet (vgl. Ullmanns Encyklopädie der technischen Chemie, 4. Auflage, 1977, Band 14, Seite 553/554). Bei der Oxidationswäsche nach dem sogenannten Stretford-Verfahren dient z. B. zur Absorption des $H_2S$ im Waschmittel gelöstes Natriumkarbonat (vgl. obige Literaturstelle, Seite 439/440).

Bei einer Absorption von Schwefelwasserstoff aus Gasen, z. B. Koksofengasen, mit Anteilen von HCN und $O_2$ mittels alkalischer Absorptionsmittel entstehen als Nebenreaktionen toxische Schadstoffe, wie z. B. Thiocyanat ($SCN^-$) und Thiosulfat ($S_2O_3^{2-}$). Diese Verbindungen sind in der Regel bei den normalen Desorptionsbedingungen im Temperaturbereich bis 150 °C thermisch nicht regenerierbar und inaktivieren somit durch Anreicherung die Absorptionslösung.

Der Schadstoffgehalt der im Kreislauf geführten Absorptionslösung wird durch die aus dem Kreislauf ausgeschleuste Menge kontrolliert. Diese Menge ist stark abhängig von Prozeßparametern wie z. B. dem HCN- und $O_2$-Gehalt des Gases, der Alkalität und dem pH-Wert der Lösung, so daß bei ungünstigen Voraussetzungen bis zu 40 % des absorbierten Schwefels ($H_2S$) zu Schadstoffen wie Thiocyanat-, Thiosulfat- und Sulfat-Ionen umgewandelt werden.

Die Verwertung oder Vernichtung dieser toxischen Abfallauge ist nicht einfach, da Maßnahmen wie die Einleitung in eine Kanalisation aus Umweltgründen oder die Vernichtung im Falle einer Kokereianlage über die Kokskohle wegen der Anhebung des Alkalianteiles des Kokses nicht möglich sind.

Aus der DE-B-26 16 054 ist ein Verfahren zur thermischen Hochdruck-Hydrolyse von sauren Abwässern, die Cyanursäure und deren Derivate enthalten, bekannt, wobei die Hochdruck-Hydrolyse bei Temperaturen bis 275 °C und einem Druck bis 63,28 kg/cm$^2$ arbeitet und der Schadstoff Cyanursäure in der Flüssigphase zu Ammoniak und Kohlendioxid umgewandelt wird. Die gasförmigen Produkte (Kohlendioxid und Ammoniak) läßt man dabei aus den gereinigten Abwässern entweichen bzw. sie werden ausgeblasen und nicht weiter genutzt.

Eine andere Maßnahme, wie z. B. die Eindampfung der Lauge und eine eventuelle Deponierung des Salzes, ist aus ökonomischen und Umweltschutzgründen ebenfalls fragwürdig.

Es ist außerdem bekannt, die Abfallauge in einer reduzierenden Atmosphäre bei Temperaturen von 800 bis 1.100 °C unter Nutzung einer parallel laufenden $H_2$ bildenden partiellen Oxidation von Kohlenwasserstoffen zu spalten. Die Schadstoffionen sind an ein Alkali, wie z. B. $Na^+$ oder $K^+$, gebunden, das bei der Spaltung frei wird und als Alkalischmelze im Spaltreaktor mit dem feuerfesten Mauerwerk reagieren kann, bevor es in einem anschließenden Wasserbad gequencht und als Alkalikarbonat zurückgewonnen wird.

Die der Erfindung zugrunde liegende Aufgabe ist es, ein Verfahren der eingangs definierten Art vorzuschlagen, bei dem die Abfallaugen aus Absorptionsprozessen, wie z. B. dem Stretford-Frozeß, auf einfache Weise regeneriert und die toxischen Schadstoffe beseitigt bzw. umgewandelt werden.

Zur Lösung dieser Aufgabe wird erfindungsgemäß das in Kennzeichen des Hauptanspruches dargestellte Verfahren vorgeschlagen. Die Unterransprüche 2 bis 9 enthalten sinnvolle ergänzende Maßnahmen.

Mit dem erfindungsgemäßen Verfahren wurde eine Möglichkeit gefunden, die Schadstoffe in einem geschlossenen System in Stoffe umzuwandeln, die in den Absorptionsprozeß zurückgeführt, dort absorbiert und gewonnen oder aber wieder als Absorptionsmittel (Alkalikarbonat) genutzt werden können. Die Basis dieser Erfindung ist die Anwendung der an sich bekannten chemischen Technologie der Temperatur-Druck-Hydrolyse (TDH). Durch die Hydrolyse bei Temperaturen von ca. 250 bis 350 °C können die Schadstoffe wie folgt umgewandelt werden:

$$SCN^- + 3HOH \rightarrow H_2S + CO_2 + NH_3 + OH^-$$

$$S_2O_3^{2-} + HOH \rightarrow SO_4^{2-} + S^{2-} + OH^-$$

$$SO_4^{2-} + 4H^+ \rightarrow S^{2-} + 4OH$$

wobei die OH-Ionen z. B. an das Alkali-Ion gebunden werden.

Diese Umwandlung ist eine Funktion der Temperatur und des Aktivatoranteiles.

Dieser Aktivator ist z. B. $NH_3$, welches bei höheren Temperaturen und Drücken sowie Energiezufuhr in einer wäßrigen Lösung in aktive Atome gemäß

$$NH_3 \rightleftarrows N^- + 3H^+$$

gespalten werden kann und somit als H-Donator für die $SO_4$-Reduzierung, zu $H_2S$ genutzt werden kann.

Im Falle der Entschwefelung eines Gases mit HCN-Anteilen und der zwangsläufigen Thiocyanatbildung steht dieses $NH_3$ durch die hydrolytische Bildung aus den CN-Ionen zwangsläufig zur Verfügung.

In Versuchen wurden diese Gedanken bestätigt und zwar mit den folgenden Ergebnissen:

| Umwandlung | T °C | | | |
| --- | --- | --- | --- | --- |
| % | 200 | 250 | 300 | 350 |
| $SCN^-$ | - | 1 | 40 - 50 | > 99 |
| $S_2O_3^{2-}$ | > 30 | > 65 | > 99 | |

Erfindungsgemäß kann die TDH zusätzlich durch Zugabe von $NH_3$ oder $NH^{2-}$ enthaltende Verbindungen aktiviert werden. Es ist weiterhin möglich, die Abfallauge des HCN-Absorbers, die im wesentlichen $SCN^-$ enthält und die Abfallauge des $H_2S$-Absorbers, die zusätzlich insbesondere $S_2O_3^{2-}$ und $SO_4^{2-}$ enthält, in getrennten TDH-Stufen aufzuarbeiten. Es kann aber auch nur die Abfallauge des HCN-Absorbers in der TDH-Stufe und die im Vergleich dazu kleinere Abfallauge des $H_2S$-Absorbers durch eine Gasphasenhydrolyse in reduzierender Atmosphäre bei Temperaturen von mehr als 800 °C gespalten werden. Das bei der TDH anfallende Hydrolysat wird zweckmäßig in einem sogenannten Entspannungsstripper unter Zugabe von Energie entgast, wobei das anfallende Sauergas mit $H_2S$, $CO_2$ und $NH_3$ zum Rohgas vor die Vorkühler und die regenerierte Alkalilösung zum $H_2S$-Absorptionssystem zurückgeführt wird.

Schließlich hat es sich als günstig erwiesen, bei nicht ausreichender $SO_4^{2-}$-Reduzierung zu $H_2S$ eine nachgeschaltete Kaustifizierung der hydrolysierten und gestrippten Lösung mittels $Ca(OH)_2$ durchzuführen. Die dabei anfallenden, nicht wasserlöslichen Ca-Salze, z. B. $CaSO_4$, werden anschließend mittels eines Filters von der Lösung abgetrennt, die dann in den Absorptionsprozeß zurückgeführt wird. Die Ca-Salze können über die Kokskohle in den Pyrolyseprozeß eingebracht werden, wo sie zu Ca und $H_2S$ reduziert werden, wobei das Ca im Gegensatz zu Na und K im Koks nicht stört.

Die Erfindung wird anhand des beigefügten Verfahrensschemas beispielsweise näher erläutert.

Aus einer Stretford-Wäsche, die sich wegen des relativ einfachen Betriebes und des hohen Entschwefelungsgrades bei den verstärkten Umweltauflagen zur Koksofengasentschwefelung besonders eignet, werden z. B. stündlich 5.076 kg Abfallauge abgezogen, die über die Leitung (1) in den Mischbehälter (2) gegeben wird. Diese Abfallauge enthält u. a. 480 kg NaSCN, 90 kg $Na_2CO_3$ und bis zu 276 kg $NaHCO_3$. Über den Rücklauf (3) gelangen zusätzlich 272 kg $NH_3$ und HOH in den Mischbehälter (2), so daß über Leitung (4) mit Hilfe der Pumpe (5) 5348 kg Abfallauge zum Hydrolysereaktor (8) geleitet werden. Diese wird mit ca. 30 °C aus dem Mischbehälter (2) abgezogen und im Wärmetauscher (6) mit Hilfe der aus dem Hydrolysatstripper (17) kommenden regenerierten Alkalilösung auf 90 °C und in anschließenden Wärmetauscher (7) mit Hilfe des aus dem Hydrolysereaktor abgezogenen Hydrolysates auf 260 °C erhitzt und dem Hydrolysereaktor (8) zugeführt. Mit einer Temperatur von 300 °C bei einem Druck von 80 bar wird sie über Leitung (13) dem Entgasungsbehälter (14) zugeführt. Über die Leitung (15) gelangen 5.337 kg Hydrolysat zum Hydrolysatstripper (17) und werden dort oberhalb der Heizflächen aufgegeben, denen über (18) ca. 1 t Dampf zugegeben und über (19) das Kondensat abgezogen wird. Aus dem Entgasungsbehälter (14) werden ca. 10 kg Gasphase abgezogen und über Leitung (16) am Fuß des Hydrolysatstrippers (17) zugegeben. Das über Leitung (21) abgezogene Gas wird im Kühler (22) auf 80 °C gekühlt. Bei (23) wird das Sauergas, das im wesentlichen 100 kg $H_2S$, 130 kg $CO_2$, < 40 kg $NH_3$ und etwa 10 kg $N_2$ und $H_2$ enthält, zur Rückführung zum Rohgas vor die Vorkühler entnommen. Ein Teil des aus dem Kühler (22) ablaufenden Kondensates wird über Leitung (24) am Kopf des Strippers (17) aufgegeben, während u. a. 68 kg $NH_3$ über die Leitung (3) auf den Mischbehälter (2) gegeben werden. Am Fuß des Strippers (17) werden 4.694 kg regenerierte Alkalilösung, die 240 kg NaSCN, 404 kg $Na_2CO_3$ und 27 kg $NaHCO_3$ enthält, ins Entschwefelungssystem zurückgeführt. Über (25) können zusätzlich $NH_3$ oder andere $NH_2^-$ enthaltende Verbindungen als Aktivator in den Mischbehälter (2) gegeben werden.

Bezugszeichenliste

(1) Abfallauge aus $H_2S$-Absorptionssystem

| | |
|---|---|
| (2) | Mischbehälter |
| (3) | Rücklauf aus (22) |
| (4) | Zuführung zu (8) |
| (5) | Pumpe |
| (6), (7) | Wärmetauscher |
| (8) | Hydrolysereaktor |
| (9) | Röhrenofen |
| (10) | Heizgaszugabe |
| (11), (12) | Ölkreislauf |
| (13) | Hydrolysat |
| (14) | Entgasungsbehälter |
| (15) | Hydrolysat |
| (16) | Gasphase |
| (17) | Hydrolysatstripper |
| (18) | Dampfzugabe |
| (19) | Kondensatabzug |
| (20) | regenerierte Alkalilösung |
| (21) | Gasphase |
| (22) | Kühler |
| (23) | Sauergas |
| (24) | Kondensat zu (17) |
| (25) | Zugabe eines Aktivators |

## Patentansprüche

1. Verfahren zur Zersetzung von Abfallaugen aus Absorptionsprozessen, wie sie bei der Absorption von $H_2S$ bei Anwesenheit von HCN und Oxidatoren, wie z. B. $O_2$ mit Alkalilösungen, entstehen, **dadurch gekennzeichnet**, daß die in den Abfallaugen enthaltenen Schadstoffe , $SCN^-$ und/oder $S_2O_3^{2-}$, durch eine TDH (Temperatur-Druck-Hydrolyse) bei Temperaturen von 250 bis 350 °C und Drücken von 50 bis 150 bar in der Flüssigphase in Produkte wie $H_2S$, $CO_2$ und $NH_3$ umgewandelt und die Gase und die regenerierte Alkalilösung in den Absorptionsprozeß rückgeführt werden.

2. Verfahren nach Anspruch 1, **dadurch gekennzeichnet**, daß die TDH durch Zugabe von $NH_3$ oder $NH_2^-$ enthaltende Verbindungen aktiviert wird.

3. Verfahren nach einem der Ansprüche 1 oder 2, **dadurch gekennzeichnet**, daß die Abfallauge des HCN-Absorbers, die $SCN^-$ enthält, und die Abfallaugen des $H_2S$-Absorbers, die u. a. $SCN^-$, $S_2O_3^{2-}$ und $SO_4^{2-}$ enthalten, in getrennten TDH-Stufen aufgearbeitet werden.

4. Verfahren nach mindestens einem der vorhergehenden Ansprüche, **dadurch gekennzeichnet**, daß bei Anwesenheit von $SCN^-$ das anfallende $NH_3$ als Aktivator in die TDH zurückgeführt wird.

5. Verfahren nach Anspruch 3, **dadurch gekennzeichnet**, daß ein Überschuß an Alkalisulfat in einer anschließenden Kristallisation aufgearbeitet wird.

6. Verfahren nach Anspruch 3, **dadurch gekennzeichnet**, daß nur die Abfällauge des HCN-Absorbers in der TDH aufgearbeitet wird und die kleinere Menge an Abfallauge des $H_2S$-Absorbers durch die bekannte Gasphasenhydrolyse in reduzierender Atmosphäre bei Temperaturen von mehr als 800 °C gespalten wird.

7. Verfahren nach mindestens einem der vorhergehenden Ansprüche, **dadurch gekennzeichnet**, daß das bei der TDH anfallende Hydrolysat in einem Entspannungsstripper entgast wird.

8. Verfahren nach mindestens einem der vorhergehenden Ansprüche, **dadurch gekennzeichnet**, daß die nach der TDH anfallende hydrolysierte und/oder gestrippte Lösung durch Zugabe von $Ca(OH)_2$ behandelt wird und die dabei anfallenden wasserunlöslichen Ca-Salze, z. B. $CaSO_4$, mittels eines Filters von der Lösung abgetrennt werden und der Rest der Lösung in den Absorptionsprozeß zurückgeführt wird.

9. Verfahren nach Anspruch 8, **dadurch gekennzeichnet**, daß die anfallenden Ca-Salze der Kokskohle beigemischt werden.

## Claims

1. Process for the decomposition of waste solutions discharged from absorption processes involving the absorption of $H_2S$ in the presence of HCN and oxidizers, as for instance $0_2$ with alkaline solutions, **characterized in that** $SCN^-$ and/or $S_2O_3^{2-}$ present in the waste solutions as pollutants are converted into products such as $H_2S$, $CO_2$ and $NH_3$ by a temperature-pressure hydrolysis at temperatures ranging between 250 and 350°C and pressures between 50 and 150 bar in the liquid phase, with the gases as well as regenerated alkaline solution being returned to the absorption process.

2. Process according to Claim 1 **characterized in that** the temperature-pressure hydrolysis is activated by adding $NH_3$ or $NH_2^-$ containing compounds.

3. Process according to one of Claims 1 or 2 **characterized in that** the $SCN^-$ containing waste solution discharged from the HCN absorber and the waste solutions from the $H_2S$ absorber which among other constituents contain $SCN^-$, $S_2O_3^{2-}$ and $SO_4^{2-}$ are processed in separate stages of the temperature-pressure hydrolysis.

4. Process according to at least one of the above described Claims **characterized in that** in the presence of $SCN^-$ the arising $NH_3$ is returned as activating agent to the temperature-pressure hydrolysis.

5. Process according to Claim 3 **characterized in that** an excess amount of alkaline sulfate is processed in a subsequent crystallization system.

6. Process according to Claim 3 **characterized in that** only the waste solution of the HCN absorber is processed by temperature-pressure hydrolysis and the smaller amount of waste solution from the $H_2S$ absorber is split by the known process of gas-phase hydrolysis in a reducing atmosphere at temperatures in excess of 800°C.

7. Process according to at least one of the above mentioned Claims **characterized in that** the hydrolysate produced by the temperature-pressure hydrolysis is deaerated in a flash stripper.

8. Process according to at least one of the above mentioned Claims **characterized in that** the hydrohyzed and/or stripped solution downstream of the temperature-pressure hydrolysis is treated by adding $Ca(OH)_2$ and the water-insoluble Ca salts generated during this process, for example $CaSO_4$, are separated from the solution by means of a filter while the rest of the solution is returned to the absorption process.

9. Process according to Claim 8 **characterized in that** the arising Ca salts are admixed to the coking coal.

## Revendications

1. Procédé de décomposition de lessives résiduaires de processus d'absorption comme elles sont générées lors de l'absorption de $H_2S$ en présence de HCN et d'oxydants comme par exemple $0_2$ avec solutions alcalines
**caractérisé par le fait**
que les substances nuisibles $SCN^-$ et/ou $S_2O_3^{2-}$ contenues dans les lessives résiduaires sont transformées par une HTP (hydrolyse température-pression) à des températures situées entre 250 et 350 °C et avec des pressions allant de 50 à 150 bars pour donner des produits tels que $H_2S$, $CO_2$ et $NH_3$ et que les gaz ainsi que la solution alcaline régénérée sont reconduits dans le système d'absorption.

2. Procédé selon la revendication 1
**caractérisé par le fait**
que la HTP est activée par l'addition de $NH_3$ ou de combinaisons contenant du $NH_2^-$.

3. Procédé selon l'une des revendications 1 ou 2
**caractérisé par le fait**

que la lessive résiduaire de l'absorbeur HCN contenant du $SCN^-$ et que les lessives résiduaires de l'absorbeur $H_2S$ contenant entre autres du $SCN^-$, du $S_2O_3^{2-}$, et du $SO_4^{2-}$ sont traitées dans des phases HTP séparées.

**4.** Procédé selon au moins l'une des revendications précédentes
**caractérisé par le fait**
qu'en présence de $SCN^-$, le $NH_3$ généré est reconduit en tant qu'activateur dans la HTP

**5.** Procédé selon la revendication 3
**caractérisé par le fait**
qu'un excédent de sulfate d'alcali est transformé dans un système de cristallation suivant.

**6.** Procédé selon la revendication 3
**caractérisé par le fait**
que seule la lessive résiduaire de l'absorbeur HCN est traitée dans la HTP et que la plus petite quantité de lessive résiduaire de l'absorbeur $H_2S$ est craquée au moyen de l'hydrolyse à phase gazeuse connue dans une atmosphère de réduction à des températures de plus de 800 °C.

**7.** Procédé selon au moins l'une des revendications précédentes
**caractérisé par le fait**
que l'hydrolysat produit lors de la HTP est dégazé dans un stripper de détention.

**8.** Procédé selon au moins l'une des revendications précédentes
**caractérisé par le fait**
que la solution hydrolysée et/ou craquée générée après la HTP est traitée par addition de $Ca(OH)_2$ et que les sels de calcium alors produits et insolubles dans l'eau, p. ex. le $CaSO_4$, sont séparés de la solution au moyen d'un filtre et que le reste de la solution est reconduit dans le processus d'absorption.

**9.** Procédé selon la revendication 8
**caractérisé par le fait**
que les sels de calcium générés sont mélangés au charbon à coke.

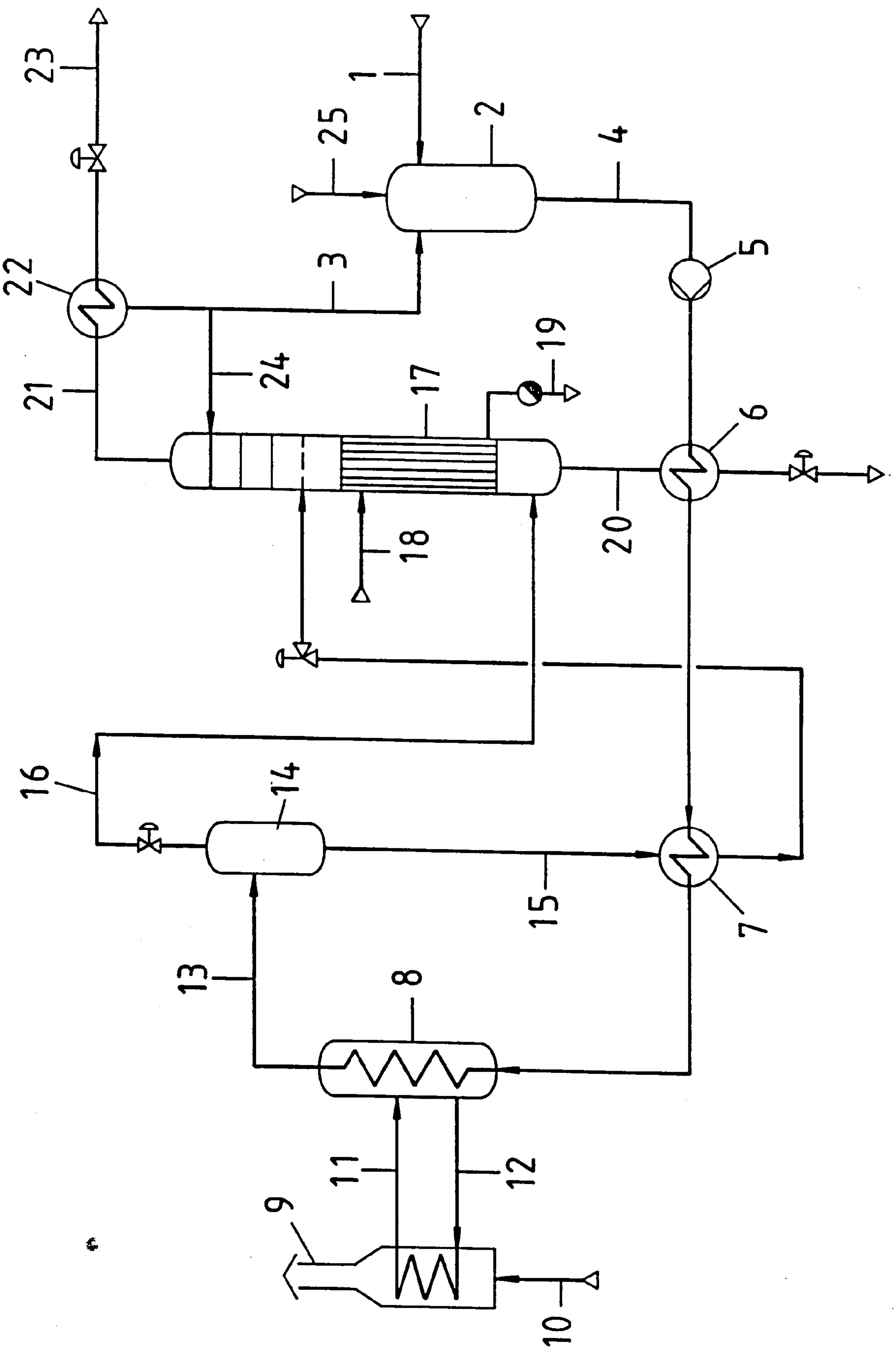
1
2
3
4
5
6
7
8
9
10
11
12
13
14
15
16
17
18
19
20
21
22
23
24
25